# EUROPEAN PATENT APPLICATION

(11) **EP 2 490 095 A2**
(43) Date of publication of application: **22.08.2012**
(21) Application number: 11188893.9
(22) Date of filing: 11.11.2011
(51) Int. Cl.: G06F 1/16, G06F 3/048

(54) **Electronic book reader and display method**

(30) Priority: 18.02.2011 TW 100105542
(71) Applicant: Hon Hai Precision Industry Co., Ltd., New Taipei City (TW)
(72) Inventor: Lin, Tay-Yang, Tu-Cheng, New Taipei (TW); Chen Chin-Feng, Tu-Cheng, New Taipei (TW); Liu Shu-Ming, Tu-Cheng, New Taipei (TW); Shih, Chi-Tse, Tu-Cheng, New Taipei (TW); Hou Ni-Chun, Tu-Cheng, New Taipei (TW); Hsu, Hsin-Chih, Tu-Cheng, New Taipei (TW); Du, Cheng-Hsiu, Tu-Cheng, New Taipei (TW)
(74) Representative: Gray, John James

(57) **Abstract**

An electronic book reader includes a display, a back panel, and a touch panel. The display displays an electronic book. The touch panel is connected between the display and the back panel. An obtuse angle is defined between the display and a touch panel. The touch panel is to generate a sliding signal in response to a finger sliding on the touch panel for controlling the display of the electronic book.

## Description

### Field

The present disclosure relates to electronic book readers, and particularly to, an electronic book reader with one-handed convenience and an electronic book display method.

### BackGround

An electronic book (e-book) is mainly a digital media equivalent of a conventional printed book. E-books are usually read on personal computers or smart phones, or on dedicated hardware devices known as e-book readers. The e-book reader often has a large size. Users often need to operate the e-book reader with two hands when using the e-books, which is inconvenient.

Therefore, there is room for improvement within the art.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the embodiments. Moreover, in the drawings, like reference numerals designate corresponding parts throughout the several views.

FIG. 1 is a block diagram of an embodiment of the electronic book reader.

FIG. 2 is a front view of an embodiment of the electronic book reader.

FIG. 3 is a side view of an embodiment of the electronic book reader.

FIG. 4 is a flowchart in accordance with an embodiment of an electronic book displaying method.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In general, the word "module," as used herein, refers to logic embodied in hardware or firmware, or to a collection of software instructions, written in a programming language, such as, Java, C, or assembly. One or more software instructions in the modules may be embedded in firmware, such as in an EPROM. The modules described herein may be implemented as either software and/or hardware modules and may be stored in any type of non-transitory computer-readable medium or other storage device. Some non-limiting examples of non-transitory computer-readable media include CDs, DVDs, BLU-RAY, flash memory, and hard disk drives.

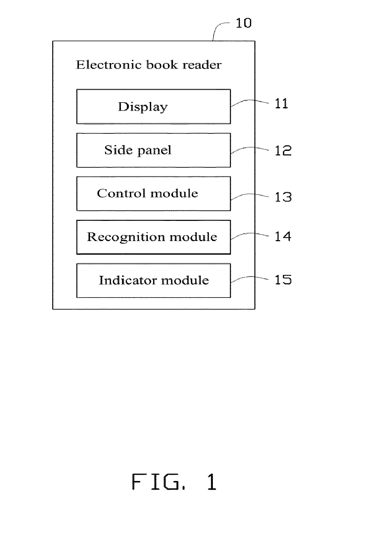

Referring to FIG. 1, an e-book reader 10 includes a display 11, a side panel 12, a control module 13, a recognition module 14, and an indicator module 15. The display 11 is disposed on a front surface of the e-book reader 10. The side panel 12 is disposed on a side surface of the e-book reader 10. In one embodiment, the display 11 is a touch screen and the side panel 12 is a touch panel.

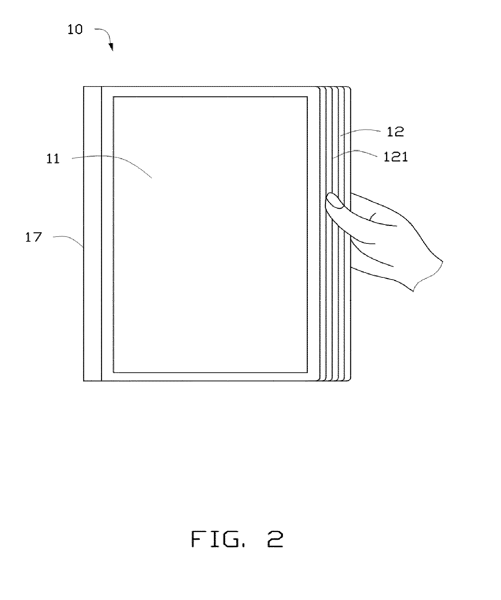

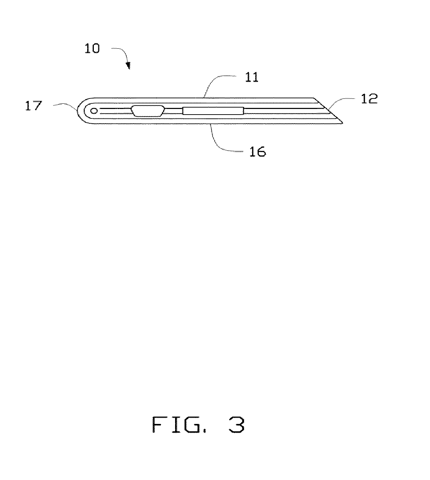

Referring to FIGS. 1 to 3, the side panel 12 is connected to the display 11. An obtuse angle is defined between the side panel 12 and the display 11. In one embodiment, the obtuse angle is about 135 degrees. The e-book reader 10 further includes a back panel 16 substantially parallel to the display 11 and a connecting portion 17. The side panel 12 is connected between the display 11 and the back panel 16. The connecting portion 17 is connected between the display 11 and the back panel 16 opposite to the side panel 12. The cross section of the connecting portion 17 is semicircular. The back panel 16 is disposed on a rear surface of the e-book reader 10. When using the e-book reader 10, users face the display 11. Users may conveniently contact the side panel 12 with their finger(s) or thumb(s). In one embodiment, the side panel 12 includes a plurality of waves 121 substantially parallel to each other.

The display 11 is used for displaying e-books. The side panel 12 records the physical contact(s) made by fingers moving across the panel, (sliding signal) and sending the sliding signal to the recognition module 14. The recognition module 14 is used for recognizing the sliding signal and sending a recognition result to the control module 13. For example, when the side panel 12 records contact along a leftward direction, the e-book is turned to a back page, and when the side panel 12 records contact along a rightward direction, the recognition result is that the e-book is turned to a front page. If the thumb of the user slides upwards, along or parallel to the waves 121, towards the top of the page, the recognition result is that the e-book pages through a number of pages. The control module 13 is used for controlling the e-book reader 10 to display the page(s) according to the recognition result. The indicator module 15 is mounted inside of the side panel 12 and is visible to the user. The indicator module 15 indicates different recognition results by displaying different colors. For example, the recognition result may turn to a front page, and then the indicator module 15 displays a yellow light.

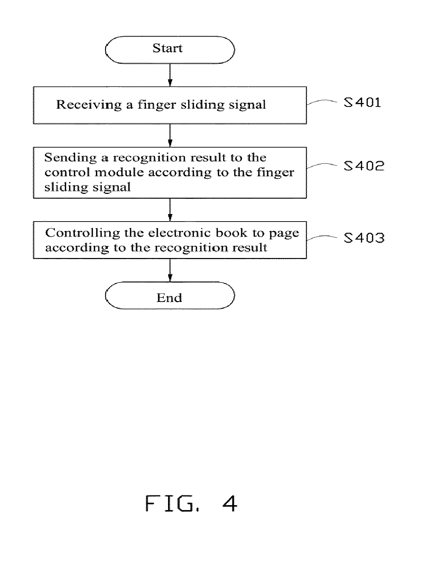

Referring to FIGS. 1 and 4, a method of using the e-book reader 10 is shown. An embodiment of the method is as follows.

In step S401, after the e-book is opened, the side panel 12 receives a finger sliding signal when a user slides his finger on the side panel 12.

In step S402, the recognition module 14 sends a recognition result to the control module 13 according to the finger sliding signal.

In step S403, the control module 13 controls the e-book to go to the page according to the recognition result.

The side panel 12 is disposed between the display 11 and the back panel 16. Thus, users can hold the e-book reader 10 with just one hand.

Although numerous characteristics and advantages of the embodiments have been set forth in the foregoing description, together with details of the structure and function of the embodiments, the disclosure is illustrative only, and changes may be made in detail, especially in the matters of shape, size, and the arrangement of parts within the principles of the present disclosure to the full extent indicated by the broad general meaning of the terms in which the appended claims are expressed.

Depending on the embodiment, certain of the steps of a method(s) described may be removed, others may be added, and the sequence of steps may be altered. The description and the claims drawn for a method may include some indication in reference to certain steps. However, the indication used is only to be viewed for identification purposes and not as a suggestion as to an order for the steps.

## Claims

1. An electronic book reader, comprising:
a display for displaying an electronic book;
a back panel substantially parallel to the display; and
a touch panel connected between the display and the back panel, wherein an obtuse angle is defined between the display and a touch panel, and the touch panel is to generate a sliding signal in response to a finger sliding on the touch panel for controlling the electronic book.

2. The electronic book reader of claim 1, wherein the touch panel comprises a plurality of waves.

3. The electronic book reader of claim 1, wherein the obtuse angle is about 135 degrees.

4. The electronic book reader of claim 1, further comprising a connecting portion connected between the back panel and the display, the connecting portion and the touch panel being connected to opposite sides of the display.

5. The electronic book reader of claim 4, wherein a cross section of the connecting portion is arc-shaped.

6. The electronic book reader of claim 1, wherein the display is a touch screen.

7. The electronic book reader of claim 1, further comprising a recognition module and a control module, wherein the recognition module receives the sliding signal and sends a recognition result of the finger sliding signal, and the control module controls the electronic book to display a page of the electronic book according to the recognition result.

8. The electronic book reader of claim 7, further comprising an indicator module mounted inside the touch panel, the indicator module being to display different colors according to the recognition results.

9. An electronic book display method comprising:
providing an electronic book reader comprising a display, a back panel substantially parallel to the display, a touch panel connected between the display and the back panel, an obtuse angle being defined between the display and the touch panel, the touch panel adapted to receiving a plurality of finger sliding signals from a user;
a recognition module adapted to received a finger sliding signal of the plurality of finger sliding signals and sending a recognition result of a plurality of recognition results; and
a control module receiving the one recognition result;
displaying an electronic book via the display;
generating a sliding signal in response to a finger sliding on the touch panel;
recognizing, via the recognition module, the finger sliding signal and sending the recognition result corresponding to the finger sliding signal to the control module; and
controlling the electronic book to display a page according to the recognition result by the control module.

10. The electronic book display method of claim 9, further comprising displaying a colored light corresponding to the recognition result.

11. An electronic book display method comprising:
providing a display and a touch panel connected to the display;
generating a sliding signal in response to a finger sliding on the touch panel;
displaying a page of an electronic book according to the sliding signal.

12. The electronic book display method of claim 11, further comprising displaying a colored light corresponding to the finger sliding signal.

13. The electronic book display method of claim 11, wherein when the sliding signal is a sliding direction on the touch panel from right to left by the finger, a page following the current displayed page is displayed.

14. The electronic book display method of claim 11, wherein when the sliding signal is a sliding direction on the touch panel from left to right by the finger, a page preceding the current displayed page is displayed.

15. The electronic book display method of claim 11, wherein when the sliding signal is a sliding direction on the touch panel from down to up by the finger or along the direction of the waves, a plurality of pages is turned through.
